# EUROPÄISCHE PATENTANMELDUNG

(11) **EP 3 542 615 A1**
(43) Veröffentlichungstag der Anmeldung: **25.09.2019**
(21) Anmeldenummer: 19150878.7
(22) Anmeldetag: 09.01.2019
(51) Int. Cl.: A01D 75/18, A01D 41/127, G05G 1/01, G05G 1/02, G05G 1/04, G05G 1/08, B60K 37/06

(54) **BEDIENEINHEIT FÜR EINE LANDWIRTSCHAFTLICHE ARBEITSMASCHINE, BEDIENKONSOLE MIT DER BEDIENEINHEIT, LANDWIRTSCHAFTLICHE ARBEITSMASCHINE MIT DER BEDIENKONSOLE UND VERFAHREN ZUM LÖSEN EINES GUTSTAUS IN EINER LANDWIRTSCHAFTLICHEN ARBEITSMASCHINE**

(30) Priorität: 14.03.2018 DE 102018105880
(71) Anmelder: CLAAS Selbstfahrende Erntemaschinen GmbH, 33428 Harsewinkel (DE)
(72) Erfinder: Jeppe, Eckehardt, 34289 Zierenberg (DE); Tepper, Andreas, 48231 Warendorf (DE)

(57) **Zusammenfassung**

Die vorliegende Erfindung betrifft eine Bedieneinheit (51) für eine landwirtschaftliche Arbeitsmaschine (2) mit einem ersten Bedienschalter (531) und einem zweiten Bedienschalter (532), die zum Umschalten zwischen verschiedenen Betriebsmodi (BN, BA, BR, BG) eines Aggregates (1) der Arbeitsmaschine (2) vorgesehen sind, wobei der erste Bedienschalter (531)
• von einer Grundstellung (G) ausgehend in eine erste Schaltstellung (E1) und zurück, oder
• von der Grundstellung (G) ausgehend in eine zweite Schaltstellung (A1) und zurück, verstellbar ist, wobei der zweite Bedienschalter (532)
• von einer Ausschaltstellung (A2) in eine Einschaltstellung (E2) und zurück, verstellbar ist, und wobei den Schaltstellungen (E1, A1, E2, A2) der Bedienschalter (531, 532) eine Schaltfunktion zum Schalten des Aggregates (1) in einen Betriebsmodus zugeordnet ist, wobei der zweite Bedienschalter (532) ein Umschalter zum Umschalten der Schaltfunktionen des ersten Bedienschalters (531) ist.
Die vorliegende Erfindung betrifft zudem eine Bedienkonsole (50) mit einer solchen Bedieneinheit (51), eine landwirtschaftliche Arbeitsmaschine (2) mit der Bedienkonsole (50) sowie ein Verfahren zum Lösen eines Gutstaus in einer landwirtschaftlichen Arbeitsmaschine.

## Beschreibung

Die vorliegende Erfindung betrifft eine Bedieneinheit für eine landwirtschaftliche Arbeitsmaschine mit einem ersten Bedienschalter und einem zweiten Bedienschalter, die zum Umschalten zwischen verschiedenen Betriebsmodi eines Aggregates der Arbeitsmaschine vorgesehen sind, wobei der erste Bedienschalter
- von einer Grundstellung ausgehend in eine erste Schaltstellung und zurück, oder
- von der Grundstellung ausgehend in eine zweite Schaltstellung und zurück, verstellbar ist, und wobei der zweite Bedienschalter
- von einer Ausschaltstellung in eine Einschaltstellung und zurück,
   verstellbar ist. Die vorliegende Erfindung betrifft zudem eine Bedienkonsole mit einer solchen Bedieneinheit, eine landwirtschaftliche Arbeitsmaschine mit der Bedienkonsole sowie ein Verfahren zum Lösen eines Gutstaus in einer landwirtschaftlichen Arbeitsmaschine.

Um eine hohe Arbeitsleistung und Arbeitsqualität zu erzielen, müssen landwirtschaftliche Arbeitsmaschinen während einer Erntefahrt ständig an das Erntegut sowie örtliche Gegebenheiten wie beispielsweise die Feldbeschaffenheit oder wechselnde Wetterbedingungen angepasst werden. Dabei werden die Arbeitsmaschinen möglichst an ihrer Leistungsgrenze gefahren, um den erzielten Ertrag zu maximieren. Dies stellt hohe Anforderungen an den Bediener der landwirtschaftlichen Arbeitsmaschine. Es ist daher wichtig, den Bediener während der Erntefahrt zu entlasten und ihm einen möglichst großen Komfort für seine Arbeit zu bieten. Dafür besteht die Tendenz, viele Vorgänge in den Arbeitsmaschinen zu automatisieren. Soweit eine Handhabung durch den Bediener jedoch erforderlich ist, sollte diese über die Dauer der Erntefahrt intuitiv möglich sein.

Die Druckschrift DE 10 2015 107 089 A1 offenbart ein landwirtschaftliches Fahrzeug, in dessen Fahrerkabine benachbart zu einem Fahrersitz eine Armlehne vorgesehen ist, an der mittels eines gemeinsamen Tragarms eine Anzeigeeinrichtung sowie eine erste Bedien- und Eingabeeinheit schwenkbar gelagert sind. Durch die Schwenkbarkeit sind die Positionen der Anzeigeeinrichtung und der ersten Bedien- und Eingabeeinheit an die Körpergröße und die Gewohnheiten des Bedieners anpassbar. Die Bedienung der Anzeigeeinrichtung und der ersten Bedien- und Eingabeeinheit ist daher für den Bediener komfortabel möglich.

Das Bedienen eines Vorsatzgerätes erfolgt bei landwirtschaftlichen Arbeitsmaschinen wie beispielsweise einem Mähdrescher herkömmlich über einen Druck- und/oder Kippschalter, der ein Einschalten des Vorsatzgerätes, ein Ausschalten des Vorsatzgerätes und gegebenenfalls zudem ein Abbremsen des Vorsatzgerätes ermöglicht.

Anhäufungen von Erntegut oder Fremdkörper im Einzugskanal können in den Arbeitsorganen einer solchen Arbeitsmaschine zu einem Gutstau oder einer Verstopfung der Arbeitsaggregate führen. Um diese zu beseitigen, ist es bekannt, die Arbeitsaggregate, insbesondere ein Vorschaltgerät und/oder einen Einzugskanal der Arbeitsmaschine, zu reversieren, das heißt gegen eine Förderrichtung des Erntegutes in die Arbeitsmaschine zu betreiben. Dadurch wird das Erntegut wieder aus dem Vorsatzgerät und/oder dem Einzugskanal heraus transportiert.

Das Vorsatzgerät eines Mähdreschers muss bei einem Gutstau zunächst ausgeschaltet sein, um es reversieren zu können. Zum Reversieren des Vorsatzgerätes ist herkömmlich an den Bedien- und Eingabeeinheiten ein separater Druck- und/oder Kippschalter vorgesehen. Dabei ist es erforderlich, sowohl den Druck- und/oder Kippschalter zum Einschalten des Vorsatzgerätes als auch den Druck- und/oder Kippschalter zum Reversieren des Vorsatzgerätes zu betätigten, da das Vorsatzgerät erst durch das Betätigen des Druck- und/oder Kippschalters zum Einschalten des Vorsatzgerätes mit dem Antrieb verbunden wird. Für den Bediener erfordert dies jedoch ein Umgreifen der Bedienhand, so dass die Bedienung für ihn unkomfortabel und nicht intuitiv ist.

Für einen Notstopp des Vorsatzgerätes verfügen landwirtschaftliche Arbeitsmaschinen zumeist über einen für den Bediener sehr leicht zugänglichen Taster, den der Bediener sehr schnell betätigen kann oder auf den er in der Notsituation schlagen kann, um das Vorsatzgerät augenblicklich zu stoppen. Der Taster kann von den übrigen Wipp- und/oder Kippschaltern, mit denen das Vorsatzgerät bedient wird, entfernt angeordnet sein, beispielsweise an einem vor allem für die Regulierung der Geschwindigkeit vorgesehenen Multifunktionsgriff. Zudem ist es auch bekannt, einen solchen Notstopp durch ein Aufschlagen auf den für das Ein- und Ausschalten des Vorsatzgerätes vorgesehenen Druck- und/oder Kippschalter zu ermöglichen.

Oftmals lässt sich ein Gutstau oder eine Verstopfung nicht von der Fahrerkabine aus lösen. Dies ist umso häufiger der Fall, je breiter das Vorsatzgerät ist, da die Menge des im Vorsatzgerät transportierten Erntegutes und die vom Erntegut im Vorsatzgerät zurück zu legenden Wege mit der Breite des Vorsatzgerätes ansteigen. Dann erfordert ein Gutstau oder eine Verstopfung ein manuelles Eingreifen des Bedieners, wobei ein Teil des Erntegutes aus dem Vorsatzgerät und/oder dem Einzugskanal der landwirtschaftlichen Arbeitsmaschine manuell ausgeräumt werden muss. Dies ist aufwändig und arbeitsintensiv für den Bediener.

Jedoch besteht bei landwirtschaftlichen Arbeitsmaschinen die Tendenz, die Breite des Vorsatzgerätes weiter zu vergrößern.

Aufgabe der vorliegenden Erfindung ist es daher, eine landwirtschaftliche Arbeitsmaschine zu schaffen, die eine für den Bediener komfortable und intuitive Bedienung eines Aggregates, insbesondere eines Vorsatzgerätes und/oder eines Einzugskanals, der landwirtschaftlichen Arbeitsmaschine sowohl im Betrieb als auch bei einem Gutstau kostengünstig ermöglicht, sowie ein Verfahren zum Lösen eines Gutstaus von der Fahrerkabine aus.

Die Aufgabe wird gelöst mit einer Bedieneinheit für eine landwirtschaftliche Arbeitsmaschine mit den Merkmalen des unabhängigen Patentanspruchs 1, einer Bedienerkonsole mit den Merkmalen des unabhängigen Patentanspruchs 7, einer landwirtschaftlichen Arbeitsmaschine mit den Merkmalen des unabhängigen Patentanspruchs 9, einer landwirtschaftlichen Arbeitsmaschine mit den Merkmalen des unabhängigen Patentanspruchs 12, sowie einem Verfahren zum Lösen eines Gutstaus in einer landwirtschaftlichen Arbeitsmaschine mit den Merkmalen des unabhängigen Patentanspruchs 13. Vorteilhafte Ausführungsformen sind den abhängigen Ansprüchen entnehmbar.

Dafür wird eine Bedieneinheit für eine landwirtschaftliche Arbeitsmaschine geschaffen. Die Bedieneinheit weist einen ersten Bedienschalter und einen zweiten Bedienschalter auf, die zum Umschalten zwischen verschiedenen Betriebsmodi eines Aggregates der Arbeitsmaschine vorgesehen sind. Das Aggregat der Arbeitsmaschine ist zum Bearbeiten von Erntegut sowie zum Fördern des Erntegutes in eine Förderrichtung vorgesehen.

Der erste Bedienschalter ist von einer Grundstellung ausgehend in eine erste Schaltstellung und zurück, oder von der Grundstellung ausgehend in eine zweite Schaltstellung und zurück verstellbar. Der zweite Bedienschalter ist von einer Ausschaltstellung in eine Einschaltstellung und zurück verstellbar.

Die Bedieneinheit zeichnet sich dadurch aus, dass den Schaltstellungen der Bedienschalter Schaltfunktionen zum Schalten des Aggregates in einen Betriebsmodus zugeordnet sind, wobei der zweite Bedienschalter ein Umschalter zum Umschalten der Schaltfunktionen des ersten Bedienschalters ist.

Bei betätigtem zweitem Bedienschalter sind die Schaltstellungen des ersten Bedienschalters daher anderen Schaltfunktionen zugeordnet. Daher werden bei betätigtem zweitem Bedienschalter andere Betriebsmodi des Aggregates geschaltet, als bei nicht betätigtem zweitem Bedienschalter. Mit dem Schalterpaar kann dadurch die doppelte Anzahl Betriebsmodi geschaltet werden.

Dabei ist es bevorzugt, dass der erste Bedienschalter elektronisch gesteuert ist. Erweist dafür bevorzugt Sensoren auf, mit denen die Schaltstellungen des ersten Bedienschalters erfassbar sind. Durch das Erfassen von Zwischenstellungen zwischen der ersten Schaltstellung und der zweiten Schaltstellung können auch mehr als diese zwei Schaltstellungen des ersten Bedienschalters unterschieden werden. Die Anzahl der mit dem ersten Bedienschalter schaltbaren Betriebsmodi ist dann entsprechend erhöht. Da der zweite Bedienschalter als Umschalter dient, können jeder Schaltstellung des ersten Bedienschalters zwei Betriebsmodi zugeordnet sein.

Prinzipiell sind als Bedienschalter Druckschalter, Kippschalter und/oder Drehschalter verwendbar. Beim Verstellen der Bedienschalter werden diese daher verschoben, verdreht und/oder gekippt. Um eine sichere Bedienung des Aggregates zu gewährleisten, ist der erste Betriebsschalter bevorzugt als Druck- und/oder Kippschalter ausgebildet. Diese Ausführungsform ermöglicht neben der Grundstellung mindestens zwei oder mehr voneinander unterscheidbare Schaltstellungen.

Besonders bevorzugt ist der erste Bedienschalter in der ersten Schaltstellung gegenüber der Grundstellung versenkt und gegen eine Erstreckungsrichtung verstellt angeordnet. In der zweiten Schaltstellung ist der erste Bedienschalter gegenüber der Grundstellung bevorzugt ebenfalls versenkt, oder er ist vorzugsweise gegenüber der Grundstellung versenkt und in die Erstreckungsrichtung verstellt angeordnet. Bei der Bedienung des ersten Bedienschalters kann die Kombination aus Versenken und Verstellen des Bedienschalters in oder gegen die Erstreckungsrichtung nicht unbewusst oder versehentlich erfolgen, so dass sich der Bediener bei der Bedienung des Aggregates seiner Handlung bewusst ist. Dadurch wird den Anforderungen an die Sicherheit bei der Bedienung des Aggregates entsprochen.

Weiterhin bevorzugt weist dieser erste Bedienschalter Zwischenstellungen beim Versenken und/oder Verstellen in oder gegen die Erstreckungsrichtung auf, denen weitere Schaltfunktionen zugeordnet sind. Dadurch sind mit einem solchen ersten Bedienschalter weitere Betriebsmodi schaltbar.

Dabei ist es besonders bevorzugt, dass der erste Bedienschalter als Taster ausgebildet ist. Dadurch kehrt er nach einem Verstellen in die erste Schaltstellung oder in die zweite Schaltstellung jeweils automatisch von dieser in die Grundstellung zurück. Unter Sicherheitsaspekten kann die Bedienung des ersten Bedienschalters in Abhängigkeit von dem zu schaltenden Betriebsmodus so vorgesehen sein, dass der Bediener nach dem Betätigten des ersten Bedienschalters und dem Schalten des Aggregates in den zugeordneten Betriebsmodus die Bedienhand frei hat. Die Bedienhand ermüdet dann weniger schnell und der Bediener kann sie für andere Bedienvorgänge in der Arbeitsmaschine nutzen.

Andererseits ermöglicht die sensorische Erfassung der Schaltstellungen des ersten Bedienschalters, dass sowohl das Verstellen von der Grundstellung in eine der Schaltstellungen als auch das Zurückstellen von der Schaltstellung in die Grundstellung erfasst wird. Sofern ein Betriebsmodus die besondere Aufmerksamkeit des Bedieners erfordert und/oder das Aggregat aus dem Betriebsmodus sehr schnell ausschaltbar sein sollte, ist es daher ebenfalls bevorzugt, ein Festhalten des ersten Bedienschalters in einer der Schaltstellungen sensorisch zu erfassen. Bezüglich der Bedienung des ersten Bedienschalters kann daher in Abhängigkeit von der für den Betriebsmodus erforderlichen Sicherheit einerseits und dem Bedienkomfort für den Bediener andererseits abgewogen werden, ob die Bedienhand freigegeben wird oder nicht. Besonders bevorzugt wird der erste Bedienschalter zum Schalten eines sicherheitsrelevanten Betriebsmodus genutzt, indem er in der diesem zugeordneten Schaltstellung gehalten wird.

Da der zweite Bedienschalter nur als Umschalter für die Schaltfunktionen des ersten Bedienschalters dient, kann er kostengünstig, beispielsweise als insbesondere herkömmlicher Druckschalter, ausgebildet sein. Vorzugsweise ist er in der Einschaltstellung gegenüber der Ausschaltstellung verschoben, verdreht und/oder gekippt angeordnet. Besonders bevorzugt ist der zweite Bedienschalter als ein Druckschalter oder als ein Kippschalter ausgebildet. Dann ist der als Druckschalter ausgebildete zweite Bedienschalter in der Einschaltstellung gegenüber der Ausschaltstellung verschoben, nämlich gedrückt. Der als Kippschalter ausgebildete zweite Bedienschalter ist dann in der Einschaltstellung gegenüber der Ausschaltstellung gekippt.

Bevorzugt ist auch der zweite Bedienschalter als Taster ausgebildet. Dadurch kehrt auch der zweite Bedienschalter nach einem Verstellen von der Ausschaltstellung in die Einschaltstellung automatisch in die Ausschaltstellung zurück. Zudem ist bevorzugt, dass auch bei dem zweiten Bedienschalter sowohl das Verstellen von der Ausschaltstellung in die Einschaltstellung als auch das Verstellen zurück erfasst wird. Dadurch kann auch bei dem zweiten Bedienschalter zwischen der zu beachtenden Sicherheit bei der Bedienung des Aggregates und dem Komfort für den Bediener abgewogen werden, ob der zweite Bedienschalter nach dem Bedienen losgelassen wird, oder gehalten werden muss.

Besonders bevorzugt wird der Umschalter zum Umschalten in besonders sicherheitsrelevante Betriebsmodi genutzt. In dieser Ausführungsform ist es bevorzugt, dass der zweite Bedienschalter in der Einschaltstellung kontinuierlich durch den Bediener gehalten wird.

In einer besonders bevorzugten Ausführungsform ist dem Zurückstellen des ersten und/oder zweiten Bedienschalters aus einer Schaltstellung, in der der erste und/oder zweite Bedienschalter gehalten werden muss, das Schalten in einen Ausschalt- Betriebsmodus zugeordnet. Dadurch wird das Aggregat angehalten, wenn der erste und/oder zweite Bedienschalter losgelassen wird.

In einer besonders bevorzugten Ausführungsform sind mit dem ersten Bedienschalter und dem zweiten Bedienschalter alle Betriebsmodi des Aggregates schaltbar. Da bei dieser Ausführungsform lediglich zwei Bedienschalter für das Bedienen des Aggregates erforderlich sind, ist die Bedienung des Aggregates insgesamt sehr kostengünstig realisiert. Zudem wird nur ein Druck- und/oder Kippschalter benötigt. Für den Bediener ist eine Bedienung mit lediglich zwei Bedienschaltern sehr überschaubar.

In einer weiteren bevorzugten Ausführungsform ist dem ersten und/oder dem zweiten Bedienschalter mindestens ein Leuchtmittel zugeordnet. Die Leuchtmittel sind zum Anzeigen mindestens eines der mit dem Bedienschalter jeweils schaltbaren Betriebsmodi vorgesehen. Dabei ist es bevorzugt, die Betriebsmodi durch unterschiedliche Leuchtfarben und/oder unterschiedliches Blinken zu unterscheiden.

Die Aufgabe wird weiterhin gelöst mit einer Bedienerkonsole mit einer solchen Bedieneinheit. An der Bedienerkonsole sind sowohl der erste Bedienschalter als auch der zweite Bedienschalter angeordnet. Dadurch kann ein Umgreifen von einer Bedienerkonsole zu einer anderen Bedienerkonsole, oder ein Bedienen des Aggregates mit zwei Händen vermieden werden.

Dabei ist es besonders bevorzugt, dass alle für das Bedienen des Aggregates erforderlichen Bedienschalter an der Bedienkonsole angeordnet sind. Ganz besonders bevorzugt sind alle Betriebsmodi des Aggregates mit dem ersten Bedienschalter und dem zweiten Bedienschalter der Betriebseinheit schaltbar. Dadurch sind nur diese beiden Bedienschalter für das Bedienen des Aggregates erforderlich.

Bevorzugt sind die Bedienschalter zueinander versetzt angeordnet, so dass sie gleichzeitig einhändig bedienbar sind. Dadurch kann auch ein Wechsel der Position und/oder Ausrichtung der Bedienhand des Bedieners vermieden werden. Der Wechsel der Betriebsmodi des Aggregates ist dann für den Bediener komfortabel einhändig möglich.

Dabei ist es besonders bevorzugt, dass der zweite Bedienschalter gegenüber dem ersten Bedienschalter in Erstreckungsrichtung zurückversetzt angeordnet ist, so dass er hinter dem ersten Bedienschalter angeordnet ist. Die Bedienung des Aggregates ist dann mit verschiedenen Fingern der Bedienhand möglich.

Vorzugsweise weist die Bedienerkonsole eine Oberfläche und eine Seitenfläche auf, wobei die Seitenfläche in einem Winkel zur Oberfläche angeordnet ist. Bevorzugt ist die Seitenfläche etwa quer zur Oberfläche angeordnet. Dabei ist es weiterhin bevorzugt, dass der erste Bedienschalter an der Oberfläche angeordnet ist, und dass der zweite Bedienschalter an der Seitenfläche angeordnet ist. Die Bedienung des ersten Bedienschalters kann dann beispielsweise über den Zeigefinger und/oder den Mittelfinger der Bedienhand erfolgen. Die Bedienung des zweiten Bedienschalter ist dann gleichzeitig über den Daumen möglich.

In einer besonders bevorzugten Ausführungsform erstreckt sich die Seitenfläche in einem ersten Bereich der Bedienerkonsole im Wesentlichen parallel der Erstreckungsrichtung des ersten Bedienschalters, wobei sie sich in einem zweiten Bereich hinter dem ersten Bedienschalter in einem Erstreckungswinkel zur Erstreckungsrichtung erstreckt, und wobei der zweite Bedienschalter in dem zweiten Bereich der Seitenfläche angeordnet ist. Dabei ist der Erstreckungswinkel bevorzugt etwa parallel einer Handerstreckungsrichtung gewählt, in die sich die Bedienhand des Bedieners beim Bedienen des Vorschaltgerätes erstreckt. Das Bedienen der Bedienschalter erfordert bei dieser Anordnung kein Anwinkeln der Bedienhand, so dass die Bedienung des Aggregates bequem und gelenkschonend möglich ist.

Um den Komfort für den Bediener noch weiter zu verbessern, kann die Bedienkonsole zumindest im ersten Bereich von der Bedienhand umgreifbar ausgebildet sein. Zusätzlich oder alternativ kann eine Armablage an der Bedienerkonsole vorgesehen sein, die ein Ablegen des Armes der Bedienhand, insbesondere etwa in Handerstreckungsrichtung und insbesondere während der Bedienung der Bedieneinheit, ermöglicht.

Der erste Bedienschalter ist bevorzugt gegenüber der Oberfläche erhaben angeordnet, wobei seitlich des ersten Bedienschalters jeweils ein Steg vorgesehen ist, der sich etwa parallel der Erstreckungsrichtung des ersten Bedienschalters erstreckt. Durch den Steg wird ein versehentliches Betätigen des ersten Bedienschalters erschwert oder verhindert.

Die Aufgabe wird weiterhin gelöst mit einer landwirtschaftlichen Arbeitsmaschine mit einer solchen Bedieneinheit. Die Bedieneinheit ermöglicht eine Bedienung mindestens eines Aggregates der landwirtschaftlichen Arbeitsmaschine mit nur zwei Bedienschaltern.

Bevorzugt weist die landwirtschaftliche Arbeitsmaschine eine Bedienkonsole mit der Bedieneinheit auf, so dass die Bedienung für den Bediener sehr komfortabel ist. Dabei werden bevorzugt alle Betriebsmodi des Aggregates mit den beiden Bedienschaltern insbesondere einhändig bedient.

In einer bevorzugten Ausführungsform ist das Aggregat zum Fördern von Erntegut in eine Förderrichtung vorgesehen. Ein solches Aggregat ist bevorzugt ein Vorsatzgerät oder ein Einzugsaggregat zum Abschneiden und/oder Einziehen des Erntegutes in die landwirtschaftliche Arbeitsmaschine. Das Aggregat ist weiterhin bevorzugt rotatorisch und/oder translatorisch antreibbar. In dieser Ausführungsform ist die landwirtschaftliche Arbeitsmaschine bevorzugt ein Mähdrescher, ein Feldhäcksler, ein Traktor oder ein Frontlader.

Dabei ist es bevorzugt, dass die landwirtschaftliche Arbeitsmaschine eine Steuerungs- und Regelungseinheit umfasst, die zum Erfassen einer Schaltstellung des ersten Bedienschalters und/oder des zweiten Bedienschalters vorgesehen ist. Die Steuerungs- und Regelungseinheit ist zudem bevorzugt zum Ein- und Ausschalten des Aggregates vorgesehen. In einem Arbeitsbetrieb der landwirtschaftlichen Arbeitsmaschine ist die Steuerungs- und Regelungseinheit bevorzugt dazu ausgebildet, das Aggregat in Abhängigkeit von der erfassten Schaltstellung in oder gegen die Förderrichtung anzutreiben.

Dabei ist es weiterhin bevorzugt, dass im Arbeitsbetrieb der landwirtschaftlichen Arbeitsmaschine eine Antriebseinheit für das Aggregat mit einem Antriebsmotor verbunden ist. Beim Schalten der Betriebsmodi des Aggregates wird dieses bevorzugt mit der Antriebseinheit verbunden oder von dieser gelöst. Das Schalten der landwirtschaftlichen Arbeitsmaschine in den Arbeitsbetrieb kann mit einem dritten Bedienschalter erfolgen.

Um das Aggregat in oder gegen die Förderrichtung anzutreiben, weist es besonders bevorzugt eine Einzugseinheit, beispielsweise eine Einzugsschnecke, auf, die in eine Einzugsrichtung betreibbar, insbesondere drehbar, ist. Bei Antrieb der Einzugseinheit in die Einzugsrichtung wird das Erntegut in die Förderrichtung gefördert.

Die landwirtschaftliche Arbeitsmaschine zeichnet sich dadurch aus, dass die Steuerungs- und Regelungseinheit dazu ausgebildet ist, das Aggregat im Arbeitsbetrieb
- In einem ersten Betriebsmodus mit einer ersten Geschwindigkeit in Förderrichtung anzutreiben, wenn der erste Bedienschalter in die erste Schaltstellung verstellt wurde und der zweite Bedienschalter in der Ausschaltstellung angeordnet ist.
Der erste Betriebsmodus ist im Folgenden auch als Normal- Betriebsmodus bezeichnet.

Zusätzlich oder alternativ ist die Steuerungs- und Regelungseinheit dazu ausgebildet, das Aggregat im Arbeitsbetrieb
- In einem zweiten Betriebsmodus anzuhalten, wenn der erste Bedienschalter in die zweite Schaltstellung verstellt wurde und der zweite Bedienschalter in der Ausschaltstellung angeordnet ist.
Der zweite Betriebsmodus ist im Folgenden auch als Ausschalt- Betriebsmodus bezeichnet.

Zusätzlich oder alternativ ist die Steuerungs- und Regelungseinheit dazu ausgebildet, das Aggregat im Arbeitsbetrieb
- In einem dritten Betriebsmodus mit einer zweiten Geschwindigkeit in Förderrichtung anzutreiben, solange der erste Bedienschalter in die erste Schaltstellung und gleichzeitig der zweite Bedienschalter in die Einschaltstellung verstellt sind.
Bevorzugt ist die zweite Geschwindigkeit gegenüber der ersten Geschwindigkeit langsamer. Der zweite Betriebsmodus ist im Folgenden daher auch als langsamer Betriebsmodus bezeichnet.

Zusätzlich oder alternativ ist die Steuerungs- und Regelungseinheit dazu ausgebildet, das Aggregat im Arbeitsbetrieb
- In einem vierten Betriebsmodus gegen die Förderrichtung anzutreiben, solange der erste Bedienschalter in die zweite Schaltstellung und gleichzeitig der zweite Bedienschalter in die Einschaltstellung verstellt sind.
Der vierte Betriebsmodus ist im Folgenden auch als Reversier- Betriebsmodus bezeichnet.

Im dritten und/oder vierten Betriebsmodus ist es bevorzugt, dass das Anhalten des Aggregates bei Loslassen des ersten und/oder des zweiten Bedienschalters erfolgt. Vorzugsweise wird das Aggregat bei Loslassen des ersten und/oder des zweiten Bedienschalters im Wesentlichen unmittelbar gestoppt.

Sofern der erste Bedienschalter zum Erfassen weiterer Schaltstellungen ausgebildet ist, ist es zusätzlich oder alternativ bevorzugt, dass die Steuerungs- und Regelungseinheit dazu ausgebildet ist, das Aggregat im Arbeitsbetrieb
- In einem fünften Betriebsmodus abzubremsen, wenn der erste Bedienschalter in eine dritte Schaltstellung verstellt wurde, wobei der zweite Bedienschalter in der Ausschaltstellung angeordnet ist.
Dabei ist der erste Bedienschalter in der dritten Schaltstellung bevorzugt gegenüber der zweiten Schaltstellung tiefer versenkt und/oder weiter in die Erstreckungsrichtung verstellt.

Bei dieser Ausführungsform der landwirtschaftlichen Arbeitsmaschine wird bei unbetätigtem zweitem Bedienschalter das Aggregat im Arbeitsbetrieb nach Betätigen des ersten Bedienschalters in die erste Schaltstellung, aus der es in die Grundstellung automatisch zurückkehrt, im Normal- Betriebsmodus mit der ersten Geschwindigkeit betrieben, bis es durch ein weiteres Betätigen des ersten Bedienschalters in die zweite oder dritte Schaltstellung angehalten oder zumindest abgebremst wird.

Bei betätigtem zweitem Bedienschalter wird das Erntegut im langsamen Betriebsmodus mit der zweiten Geschwindigkeit in die Förderrichtung eingezogen, wenn der erste Bedienschalter in der ersten Schaltstellung gehalten wird. Oder das Erntegut wird bei betätigtem zweitem Bedienschalter im Reversiermodus, insbesondere langsam, gegen die Förderrichtung gefördert, wenn der erste Bedienschalter in der zweiten Schaltstellung gehalten wird.

Das Betätigen des zweiten Bedienschalters führt daher immer zu einem Betriebsmodus, in dem das Aggregat mit einer anderen, insbesondere langsameren, Geschwindigkeit als im Normal- Betriebsmodus, betrieben wird.

Der erste Bedienschalter ist dabei bevorzugt so positioniert, dass sich die Erstreckungsrichtung etwa parallel der Förderrichtung erstreckt. Zum Einziehen des Erntegutes im Normal- Betriebsmodus oder im langsamen Betriebsmodus wird er bevorzugt in die Förderrichtung verstellt. Zum Transportieren gegen die Förderrichtung wird er bevorzugt gegen die Förderrichtung verstellt. Dadurch ist die Bedienung des Aggregates intuitiv möglich.

In einer besonders bevorzugten Ausführungsform, die die Aufgabe ebenfalls löst, weist die landwirtschaftliche Arbeitsmaschine ein als Vorsatzgerät ausgebildetes Aggregat auf. Das Vorsatzgerät ist im Arbeitsbetrieb der Arbeitsmaschine zum Abschneiden von Erntegut und zum Einziehen des Erntegutes in eine Förderrichtung in die landwirtschaftliche Arbeitsmaschine hinein vorgesehen. Die landwirtschaftliche Arbeitsmaschine umfasst eine Steuerungs- und Regelungseinheit, die zum Ein- und Ausschalten des Vorsatzgerätes vorgesehen ist.

Die landwirtschaftliche Arbeitsmaschine zeichnet sich dadurch aus, dass sie ein Mähdrescher ist, und dass das Vorsatzgerät im Arbeitsbetrieb in zumindest zwei verschiedenen Geschwindigkeiten in die Förderrichtung betreibbar ist. Bei dieser Ausführungsform des Mähdreschers ist bedarfsabhängig ein Wechsel der Geschwindigkeit von der ersten Geschwindigkeit im Normal- Betriebsmodus in die langsamere zweite Geschwindigkeit im langsamen Betriebsmodus möglich. Dies ist vor allem bei einem drohenden oder bereits vorhandenen Gutstau im Vorsatzgerät und/oder einem dem Vorsatzgerät nachgeschalteten Aggregat wie beispielsweise einem Einzugskanal, insbesondere einem Schrägförderer, vorteilhaft zum Lösen des Gutstaus nutzbar.

Die Aufgabe wird weiterhin gelöst mit einem Verfahren zum Lösen eines Gutstaus in einer solchen landwirtschaftlichen Arbeitsmaschine. Das Verfahren sieht vor, dass ein Aggregat, insbesondere ein Vorsatzgerät, im Arbeitsbetrieb der Arbeitsmaschine abwechselnd
- In einem dritten Betriebsmodus mit einer zweiten, gegenüber einer Geschwindigkeit des Aggregates in einem ersten Betriebsmodus, langsamen Geschwindigkeit in eine Förderrichtung, und
- In einem vierten Betriebsmodus gegen die Förderrichtung,
   betrieben wird. Dabei wird das Erntegut langsam in die Förderrichtung und wieder zurückbewegt und kann dadurch losgewackelt werden.

Dabei ist es bevorzugt, dass das Vorsatzgerät
- vor dem langsamen Antreiben in Förderrichtung, sowie
- zwischen dem langsamen Antreiben in Förderrichtung und dem Antreiben gegen die Förderrichtung,
jeweils für einen definierten Zeitraum von mehr als einer halben Sekunde, insbesondere von 0,7 - 1,5 Sekunden, automatisch angehalten wird. Vor dem Antreiben gegen die Förderrichtung wird es daher immer zunächst angehalten. Dies ist aus Sicherheitsgründen bevorzugt, um Beschädigungen am Antrieb und/oder dem Vorsatzgerät zu vermeiden.

Um dem Bediener das Loswackeln von der Fahrerkabine aus leicht und intuitiv zu ermöglichen, sieht das Verfahren zudem vor, dass der zweite Bedienschalter dabei kontinuierlich in die Einschaltstellung verstellt ist, wobei der erste Bedienschalter abwechselnd von der ersten Schaltstellung in die zweite Schaltstellung und zurück verstellt wird. Der abwechselnde Antrieb des Aggregates in und gegen die Förderrichtung, durch den das Erntegut losgewackelt wird, wird daher durch ein Vor- und Zurückstellen des ersten Bedienschalters, insbesondere mit dem Zeige- und/oder Mittelfinger der Bedienhand, bewerkstelligt, während der zweite Bedienschalter, insbesondere mit dem Daumen der Bedienhand, dauerhaft betätigt ist. Diese Bedienung ist durch den Bediener sehr einfach und intuitiv möglich. Außerdem kann das Vorsatzgerät aus Sicherheitsgründen durch Loslassen des ersten und/oder zweiten Bedienschalters im Wesentlichen unmittelbar angehalten werden.

Die Erfindung wird im Folgenden anhand von Figuren beschrieben. Die Figuren sind lediglich beispielhaft und schränken den allgemeinen Erfindungsgedanken nicht ein. Es zeigen:
- Fig. 1: in (a) - (d) schematisch eine erfindungsgemäße Bedieneinheit für eine landwirtschaftliche Arbeitsmaschine;
- Fig. 2: in (a) eine Bedienerkonsole mit einer erfindungsgemäßen Bedieneinheit, und in (b) einen Ausschnitt aus der Bedienerkonsole der Fig. 2 (a); und
- Fig. 3: eine landwirtschaftliche Arbeitsmaschine mit einer Bedienerkonsole mit einer erfindungsgemäßen Bedieneinheit.

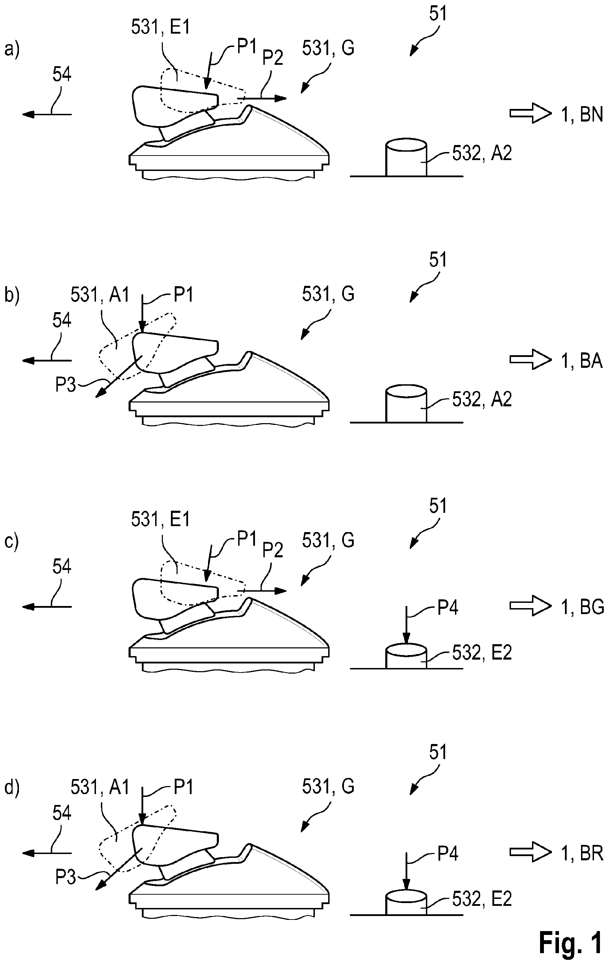

Fig. 1 zeigt schematisch eine erfindungsgemäße Bedieneinheit 51 für eine landwirtschaftliche Arbeitsmaschine 2. Eine landwirtschaftliche Arbeitsmaschine 2 ist beispielsweise ein Mähdrescher, ein Feldhäcksler, ein Traktor oder ein Frontlader. Die Erfindung ist aber nicht auf diese landwirtschaftlichen Arbeitsmaschinen 2 beschränkt, sondern auch für andere landwirtschaftliche Arbeitsmaschinen 2 nutzbar.

Die Bedieneinheit 51 ist zum Bedienen eines Aggregates 1 der landwirtschaftlichen Arbeitsmaschine 2 vorgesehen. Das Aggregat 1 der landwirtschaftlichen Arbeitsmaschine 2 wird zum Bearbeiten von Erntegut 3 genutzt. Dabei wird das Erntegut 3 in eine Förderrichtung 30 in die landwirtschaftliche Arbeitsmaschine 2 hinein transportiert.

Die Bedieneinheit 51 weist einen ersten Bedienschalter 531 und einen zweiten Bedienschalter 532 auf, die zum Umschalten zwischen verschiedenen Betriebsmodi BN, BA, BR, BG des Aggregates 1 der Arbeitsmaschine 2 vorgesehen sind. Dabei ist der erste Bedienschalter 531 von einer Grundstellung G ausgehend in eine erste Schaltstellung E1 und zurück, oder von der Grundstellung G ausgehend in eine zweite Schaltstellung A1 und zurück, verstellbar. Der zweite Bedienschalter 532 ist von einer Ausschaltstellung A2 in eine Einschaltstellung E2 und zurück verstellbar.

Den Schaltstellungen E1, A1, E2, A2 der Bedienschalter 531, 532 der Bedieneinheit ist eine Schaltfunktion zum Schalten des Aggregates 1 in einen Betriebsmodus BN, BA, BR, BG zugeordnet. In Abhängigkeit von den Schaltstellungen E1, A1, E2, A2 der Bedienschalter 531, 532 können daher verschiedene Betriebsmodi BN, BA, BR, BG des Aggregates 1 geschaltet werden. Der zweite Bedienschalter 532 ist dabei als ein Umschalter zum Umschalten der Schaltfunktionen des ersten Bedienschalters 531 vorgesehen. Dadurch ist mit den beiden Bedienschaltern 531, 532 die doppelte Anzahl der für den ersten Bedienschalter 531 unterscheidbaren Schaltfunktionen zum Schalten des Aggregates 1 nutzbar. Daher sind doppelt so viele Betriebsmodi BN, BA, BR, BG als nur mit dem ersten Bedienschalter 531 nutzbar.

Die Fig. 1 (a) - (d) zeigen den ersten Bedienschalter 531 jeweils in der Grundstellung G. In gestrichelten Linien ist jeweils das Verstellen von der Grundstellung G in die erste Schaltstellung E1 oder in die zweite Schaltstellung A1 gezeigt.

Der erste Bedienschalter 531 ist hier als Druck- und/oder Kippschalter ausgebildet. Im Folgenden werden die Begriffe Druck- und/oder Kippschalter und erster Bedienschalter 531 daher synonym verwendet.

Der zweite Bedienschalter 532 ist in den Fig. 1 (a) und (b) jeweils in der Ausschaltstellung A2, und in den Fig. 1 (c) und (d) jeweils in der Einschaltstellung E2 dargestellt. In den Fig. 1 (c) und (d) fungiert er daher als Umschalter. Er ist hier als Druckschalter ausgebildet. Daher werden im Folgenden die Begriffe Druckschalter und zweiter Bedienschalter 532 synonym verwendet.

Für den ersten und den zweiten Bedienschalter 531, 532 können aber auch andere Schalter (nicht gezeigt) verwendet werden, bei denen die Bedienschalter 531, 532 in ihren Schaltstellungen E1, A1 beziehungsweise in ihrer Einschaltstellung E2 gegenüber der Grundstellung G beziehungsweise der Ausschaltstellung A2 verschoben, verdreht und/oder gekippt angeordnet sind.

Fig. 1 (a) zeigt das Verstellen des ersten Bedienschalters 531 von der Grundstellung G in die erste Schaltstellung E1. Der erste Bedienschalter 531 erstreckt sich in eine Erstreckungsrichtung 54. Zum Verstellen in die erste Schaltstellung E1 wird er mit einer ersten Kraft P1 vertikal nach unten gedrückt. Zudem wird er mit einer zweiten Kraft P2 gegen die Erstreckungsrichtung 54 verschoben. Dies kann gleichzeitig oder hintereinander erfolgen. Dadurch ist der erste Bedienschalter 531 in der ersten Schaltstellung E1 gegenüber der Grundstellung G versenkt und gegen die Erstreckungsrichtung 54 verschoben angeordnet.

Der erste Bedienschalter 531 ist hier als Taster ausgebildet, so dass er beim Loslassen automatisch in die Grundstellung G zurückkehrt. Zudem ist er elektronisch gesteuert. Er weist Sensoren (nicht gezeigt) auf, mit denen die Schaltstellungen E1, A1, und gegebenenfalls zudem die Grundstellung G, des ersten Bedienschalters 531 erfassbar sind. Dadurch wird erfasst, in welcher Schaltstellung E1, A1, G sich der erste Bedienschalter 531 gerade befindet. Insbesondere kann erfasst werden, ob der erste Bedienschalter 531 losgelassen wurde, oder ob er noch in der ersten oder zweiten Schaltstellung E1, A1 gehalten wird.

Der zweite Bedienschalter 532 befindet sich in der Fig. 1 (a) in der Ausschaltstellung A2. Er dient hier daher nicht als Umschalter.

In der Fig. 1 (a) ist vorgesehen, dass der erste Bedienschalter 531 nach dem Verstellen in die erste Schaltstellung E1 losgelassen werden kann, so dass die Bedienhand (nicht gezeigt) des Bedieners 59 frei ist. Der erste Bedienschalter 531 kehrt dann in die Grundstellung G zurück.

Dieser Kombination der Schaltstellungen E1, A2 des ersten und zweiten Bedienschalters 531, 532 ist die Schaltfunktion "Schalten des Aggregates in einen ersten Betriebsmodus BN" hinterlegt.

Der in die landwirtschaftliche Arbeitsmaschine 2 eingebaute erste Bedienschalter 531 ist möglichst so angeordnet, dass ein Verstellen gegen die Erstreckungsrichtung 54 einem Verstellen in eine Förderrichtung 30 des Erntegutes 3 in die Arbeitsmaschine 2 entspricht. Um eine intuitive Bedienung des Aggregates 1 zu ermöglichen, ist der erste Betriebsmodus BN daher möglichst ein Betriebsmodus, bei dem das Erntegut 3 in Förderrichtung 30 transportiert wird. Im Folgenden wird dieser Betriebsmodus auch als Normal- Betriebsmodus BN bezeichnet.

Fig. 1 (b) zeigt das Verstellen des ersten Bedienschalters 531 von der Grundstellung G in die zweite Schaltstellung A1. Zum Verstellen in die zweite Schaltstellung A1 wird er mit einer ersten Kraft P1 vertikal nach unten gedrückt. Zudem wird er mit einer dritten Kraft P3 in die Erstreckungsrichtung 54 verschoben. Auch dies kann gleichzeitig oder hintereinander erfolgen. Dadurch ist der erste Bedienschalter 531 in der zweiten Schaltstellung A2 gegenüber der Grundstellung G versenkt und in die Erstreckungsrichtung 54 verschoben angeordnet.

Der zweite Bedienschalter 532 befindet sich in der Fig. 1 (b) in der Ausschaltstellung A2. Er dient auch hier daher nicht als Umschalter.

In der Fig. 1 (b) ist ebenfalls vorgesehen, dass der erste Bedienschalter 531 nach dem Verstellen in die zweite Schaltstellung A1 losgelassen werden kann, so dass die Bedienhand des Bedieners 59 frei ist. Der erste Bedienschalter 531 kehrt dann in die Grundstellung G zurück.

Dieser Kombination der Schaltstellungen A1, A2 des ersten und zweiten Bedienschalters 531, 532 ist die Schaltfunktion "Schalten des Aggregates in einen zweiten Betriebsmodus BA" hinterlegt. Da der erste Betriebsschalter 531 hier gegen die Förderrichtung 30 betätigt wird, ist der zweite Betriebsmodus BA hier der Ausschalt- Betriebsmodus, bei dem das Aggregat 1 angehalten wird.

Fig. 1 (c) zeigt das Verstellen des ersten Bedienschalters 531 analog zu Fig. 1 (a) von der Grundstellung G in die erste Schaltstellung E1. Dadurch ist der erste Bedienschalter 531 in der ersten Schaltstellung E1 gegenüber der Grundstellung G versenkt und gegen die Erstreckungsrichtung 54 verschoben angeordnet.

Der zweite Bedienschalter 532 befindet sich in der Fig. 1 (c) jedoch in der Einschaltstellung E2. Er dient hier daher als Umschalter.

Im Gegensatz zu den Kombinationen der Schaltstellungen E1, A2, A1, A2 der Fig. 1 (a) und (b) ist für die Kombination der Schaltstellungen E1, E2 der Fig. 1 (c) hier zudem vorgesehen, dass sowohl der erste Bedienschalter 531 in der ersten Schaltstellung E1 als auch der zweite Bedienschalter 532 in der Einschaltstellung E2 gehalten werden.

Dieser Kombination der Schaltstellungen E1, E2 des ersten und zweiten Bedienschalters 531, 532 ist die Schaltfunktion "Schalten des Aggregates in einen dritten Betriebsmodus BG" hinterlegt.

Dabei ist für das Zurückstellen des ersten Bedienschalters 531 aus seiner gehaltenen ersten Schaltstellung E1 in die Grundstellung G und/oder des zweiten Bedienschalters 532 aus seiner gehaltenen Einschaltstellung E2 in die Ausschaltstellung A2 die Schaltfunktion "Schalten in den Ausschalt- Betriebsmodus BA" zugeordnet. Dadurch wird das Aggregat 1 angehalten, wenn der erste und/oder zweite Bedienschalter 531, 532 losgelassen wird.

Fig. 1 (d) zeigt das Verstellen des ersten Bedienschalters 531 analog zu Fig. 1 (b) von der Grundstellung G in die zweite Schaltstellung A1. Dadurch ist der erste Bedienschalter 531 in der zweiten Schaltstellung A1 gegenüber der Grundstellung G versenkt und in die Erstreckungsrichtung 54 verschoben angeordnet.

Der zweite Bedienschalter 532 befindet sich in der Fig. 1 (d) analog der Fig. 1 (c) in der Einschaltstellung E2. Er dient hier daher ebenfalls als Umschalter.

Daher ist für die Kombination der Schaltstellungen A1, E2 der Fig. 1 (d) analog zu Fig. 1 (c) hier zudem vorgesehen, dass sowohl der erste Bedienschalter 531 in der zweiten Schaltstellung A1 als auch der zweite Bedienschalter 532 in der Einschaltstellung E2 gehalten werden.

Dieser Kombination der Schaltstellungen A1, E2 des ersten und zweiten Bedienschalters 531, 532 ist die Schaltfunktion "Schalten des Aggregates in einen vierten Betriebsmodus BR" hinterlegt.

Auch hier ist für das Zurückstellen des ersten Bedienschalters 531 aus seiner gehaltenen zweiten Schaltstellung A1 in die Grundstellung G und/oder des zweiten Bedienschalters 532 aus seiner gehaltenen Einschaltstellung E2 in die Ausschaltstellung A2 die Schaltfunktion "Schalten in den Ausschalt- Betriebsmodus BA" zugeordnet, so dass das Aggregat 1 angehalten wird.

Für den dritten und den vierten Betriebsmodus BG, BR überwiegen die Sicherheitsaspekte gegenüber dem Komfort für den Bediener 59, da die Bedienschalter 531, 532 gehalten werden müssen und die Bedienhand daher nicht freigegeben wird.

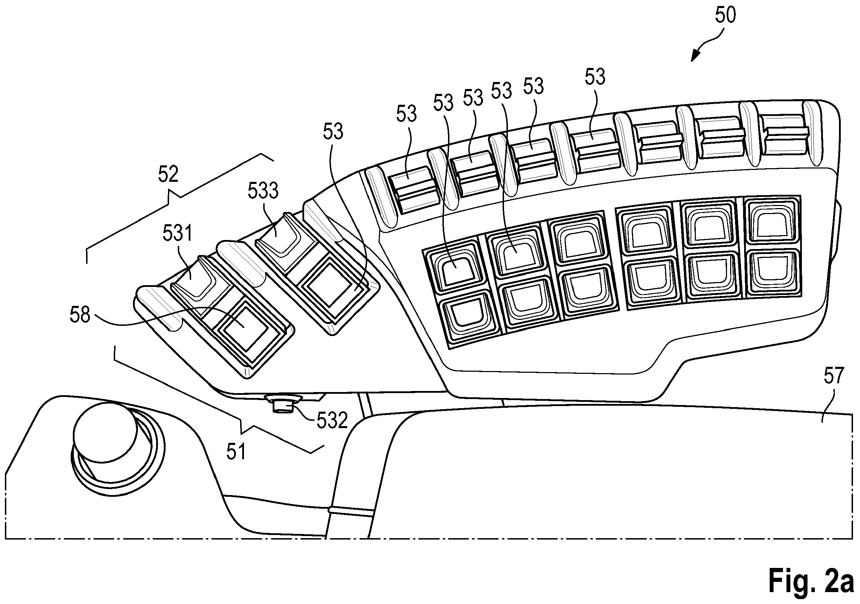

Um dem Bediener 59 die gewählte Schaltstellung E1, A1, E2, A2 zu verdeutlichen, sind den Bedienschaltern 531, 532 hier Leuchtmittel 58 zugeordnet. Dies zeigt Fig. 2 (a). In Abhängigkeit von der Schaltstellung E1, A1, E2, A2 leuchten die Leuchtmittel 58 verschiedenfarbig und/oder blinken in unterschiedlichem Rhythmus.

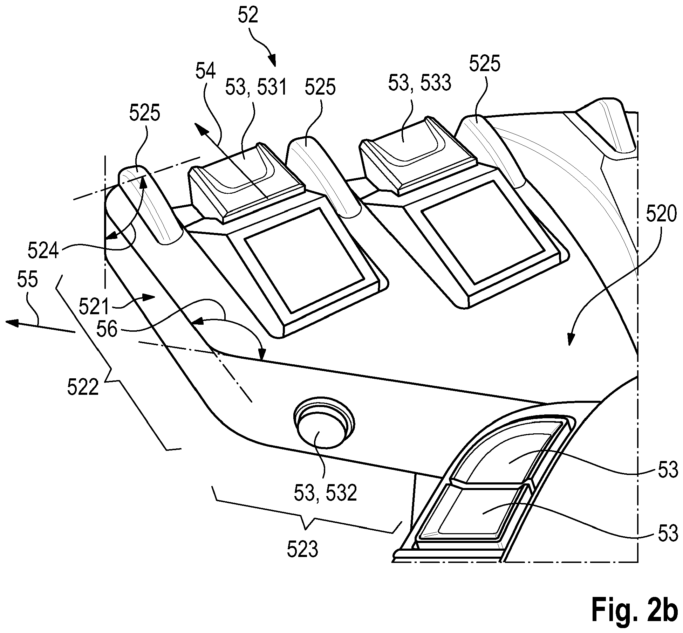

Fig. 2 zeigt in (a) eine Bedienerkonsole 50 mit der erfindungsgemäßen Bedieneinheit 51. Die Bedienerkonsole 50 weist eine Vielzahl von Bedienelementen 53 auf, die zum Bedienen der landwirtschaftlichen Arbeitsmaschine 2 vorgesehen sind. Zudem ist eine Armablage 57 an der Bedienerkonsole 50 vorgesehen, um dem Bediener 59 einen möglichst großen Bedienkomfort zu bieten.

Die Bedienerkonsole 50 weist einen von einer Hand umgreifbaren Bedienteil 52 auf, an dem die erfindungsgemäße Bedieneinheit 51 mit dem ersten Bedienschalter 531 und dem zweiten Bedienschalter 532 angeordnet ist. Zudem ist an dem Bedienteil 52 ein dritter Bedienschalter 533 angeordnet. Der dritte Bedienschalter 533 dient zum Einschalten eines Arbeitsmodus der landwirtschaftlichen Arbeitsmaschine 2, in dem eine Antriebseinheit (nicht gezeigt) für das Aggregat 1 mit einem Antriebsmotor (nicht gezeigt) wirkverbunden wird.

Fig. 2 (b) zeigt einen vergrößerten Ausschnitt des Bedienteils 52. Das Bedienteil 52 weist eine Oberfläche 520 und eine Seitenfläche 521 auf. Der erste Bedienschalter 531 ist an der Oberfläche 520 angeordnet. Er ist zum Einschalten und zum Ausschalten zumindest eines Betriebsmodus, insbesondere zum Einschalten des Normal- Betriebsmodus BN und zum wieder Ausschalten BA, des Aggregates 1 vorgesehen. Dann wird das Aggregat 1 in dem Betriebsmodus in Förderrichtung 30 mit einer ersten Geschwindigkeit angetrieben.

Die Seitenfläche 521 ist in einem Winkel 524 zur Oberfläche 520, hier etwa quer zu dieser, angeordnet. An der Seitenfläche 521 ist der zweite Bedienschalter 532 zum Einschalten und/oder Ausschalten zumindest eines weiteren Betriebsmodus BR, BG des Aggregates 1 angeordnet.

Dabei ist der zweite Bedienschalter 532 gegenüber dem ersten Bedienschalter 531 so versetzt angeordnet, dass der erste und der zweite Bedienschalter 531, 532 gleichzeitig einhändig bedienbar sind. Dafür erstreckt sich die Seitenfläche 521 in einem ersten Bereich 522 etwa parallel der Erstreckungsrichtung 54 des ersten Bedienschalters 531. In einem zweiten Bereich 523 hinter dem ersten Bedienschalter 531 erstreckt sie sich in einem Erstreckungswinkel 56 zur Erstreckungsrichtung 54. Der zweite Bedienschalter 532 ist in dem zweiten Bereich 523 der Seitenfläche 521 angeordnet.

Dabei ist der Erstreckungswinkel 56 hier so gewählt, dass sich die Bedienhand des Bedieners 59 beim Bedienen der Bedieneinheit 51 in einer Handerstreckungsrichtung 55 erstreckt, die etwa im Erstreckungswinkel 56 zur Erstreckungsrichtung 54 des ersten Bedienschalters 531 verläuft. Dadurch kann der erste Bedienschalter 531 mit dem Zeigefinger (nicht gezeigt) und/oder dem Mittelfinger (nicht gezeigt) der Bedienhand bedient werden, während gleichzeitig eine Bedienung des zweiten Bedienschalters 532 mit dem Daumen (nicht gezeigt) möglich ist.

Um ein versehentliches Betätigen des ersten Bedienschalters 531 und/oder des dritten Bedienschalters 533 zu verhindern, ist jeweils seitlich des ersten und dritten Bedienschalters 531, 533 sowie zwischen diesen ein Steg 525 vorgesehen, der sich etwa parallel der Erstreckungsrichtung 54 des ersten Bedienschalters 531 erstreckt.

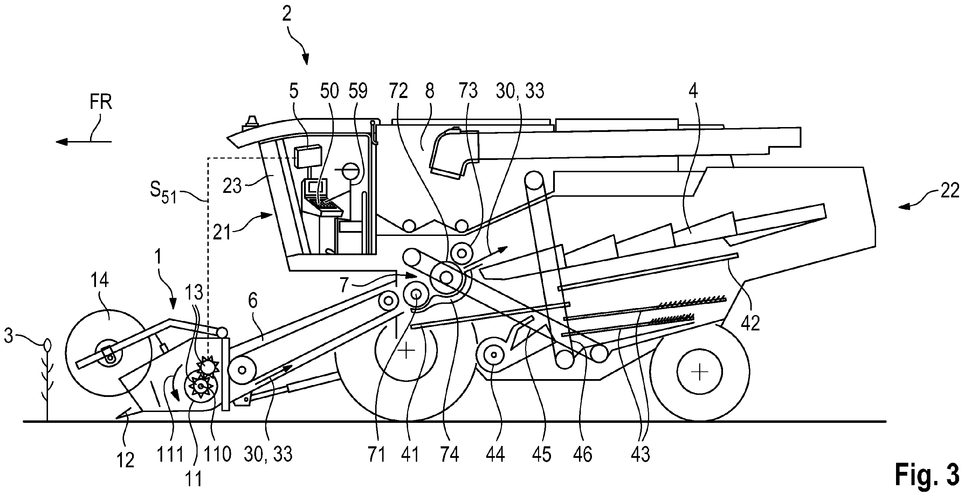

Fig. 3 zeigt eine erfindungsgemäße landwirtschaftliche Arbeitsmaschine 2. Die landwirtschaftliche Arbeitsmaschine 2 ist hier ein Mähdrescher. Daher werden im Folgenden die Begriffe landwirtschaftliche Arbeitsmaschine 2 und Mähdrescher synonym verwendet. Eine Fahrtrichtung des Mähdreschers 2 ist durch einen Pfeil FR gezeigt. Der Mähdrescher 2 weist eine Vielzahl Aggregate 1, 4, 6, 7 zum Bearbeiten des Erntegutes 3 auf. Beim Bearbeiten des Erntegutes 3 wird dieses als Gutstrom 33 in eine Förderrichtung 30 gefördert.

Der Mähdrescher 2 weist eine Frontseite 21 auf, an der eine Fahrerkabine 23 für einen Bediener 59 angeordnet ist. Zudem ist an der Frontseite 21 ein Vorsatzgerät 1 angeordnet, das zum Abschneiden und Einziehen des Erntegutes 3 in den Mähdrescher 2 hinein vorgesehen ist. Das Vorsatzgerät 1 weist eine Haspel 11 auf, die dafür vorgesehen ist, das Erntegut 3 in das Vorsatzgerät 1 hinein zu neigen und/oder anzuheben, um das Schneiden des Erntegutes 3 zu vereinfachen. Zum Abschneiden des Erntegutes 3 weist das Vorsatzgerät 1 einen Messerbalken 12 auf. Zudem weist es ein Einzugsorgan 11, hier eine Einzugsschnecke, auf, die zum Einziehen des Erntegutes 3 dient. Die Einzugsschnecke 11 ist um eine Einzugsachse 110 in und gegen eine Einzugsrichtung 111 drehbar. Das Erntegut 3 wird beim Antreiben der Einzugsschnecke11 in die Einzugsrichtung 111 zur Mitte (nicht dargestellt) des Vorsatzgerätes 1 gefördert, und dann als Gutstrom 33 in Förderrichtung 30 weiter in den Schrägförderer 6 transportiert.

Der Schrägförderer 6 bildet einen Einzugskanal des Mähdreschers 2. Über ihn wird das Erntegut 3 in Förderrichtung 30 an ein Dreschwerk 7 geleitet. Das Dreschwerk 7 weist hier drei Trommeln 71 - 73 auf, nämlich eine Vordreschtrommel 71, die einer Dreschtrommel 72 vorgelagert ist, die Dreschtrommel 72 sowie eine der Dreschtrommel 72 nachgelagerte Umlenktrommel 73. Die Vordreschtrommel 71 ist zum Vordreschen des Erntegutes 3 sowie zum Zuführen des Erntegutes 3 an die Dreschtrommel 72 vorgesehen, die Dreschtrommel 72 drischt das Erntegut 3, und die Umlenktrommel 73 übergibt das Erntegut 3 einer Nachbearbeitungseinrichtung 4, hier einem Hordenschüttler, der zum Reinigen des Erntegutes 3 vorgesehen ist. Unterhalb des Dreschwerks 7 ist ein Dreschkorb 74 angeordnet, durch den bereits gelöstes Korn aus dem Gutstrom 33 abgeschieden wird.

Die im Dreschwerk 7 und der Nachbearbeitungseinrichtung 4 abgeschiedenen Körner werden über einen Rücklaufboden 42 und einen Zuführboden 41 einer mehrere Reinigungssiebe 43 und ein Gebläse 44 umfassenden Reinigungseinrichtung (nicht bezeichnet) zugeführt. Die gereinigten Körner werden anschließend über einen Kornelevator 46 in einen Korntank 8 geleitet. Größere Bestandteile des Gutstromes 33, die nicht durch die Reinigungssiebe 43 fallen können, werden dem Dreschwerk 7 über einen Überkehrelevator 45 erneut zugeführt. Stroh und Spreu (nicht bezeichnet) werden an einer Heckseite 22 des Mähdreschers 2 auf dem Boden (nicht bezeichnet) abgelegt oder verteilt.

In der Fahrerkabine 50 des Mähdreschers 2 ist eine Bedienkonsole 50 für einen Bediener 59 des Mähdreschers 2 vorgesehen, mit dem der Bediener 59 den Mähdrescher 2 bedient. Die Bedienkonsole 50 weist eine erfindungsgemäße Bedieneinheit 51 auf. Die Bedieneinheit 51 ist zum Bedienen eines der Aggregate 1 des Mähdreschers 2, und zwar hier zum Bedienen des Vorsatzgerätes, vorgesehen. Im Folgenden werden daher die Begriffe Aggregat 1 und Vorsatzgerät synonym verwendet. Prinzipiell kann die Bedieneinheit 51 auch zum Bedienen eines anderen Aggregates 4, 6, 7 des Mähdreschers 2 vorgesehen sein.

Zum Steuern des Mähdreschers 2 weist dieser eine Steuerungs- und Regelungseinheit 5 auf. Die Steuerungs- und Regelungseinheit 5 ist dazu ausgebildet, die Schaltstellung E1, A1, E2, A2 des ersten und/oder des zweiten Bedienschalters 531, 532 zu erfassen, und das Vorsatzgerät 1 im Arbeitsbetrieb des Mähdreschers 2 in Abhängigkeit von der erfassten Schaltstellung E1, A1, E2, A2 in oder gegen die Förderrichtung 30 anzutreiben. Dies ist in Fig. 3 durch eine Signalleitung S51 schematisch dargestellt.

Die Steuerungs- und Regelungseinheit 5 treibt das Vorsatzgerät 1 im ersten, NormalBetriebsmodus BN mit einer ersten Geschwindigkeit in Förderrichtung 30 an, wenn der erste Bedienschalter 531 in die erste Schaltstellung E1 verstellt wurde und der zweite Bedienschalter 532 in der Ausschaltstellung A2 angeordnet ist. Der Normal- Betriebsmodus BN ist der während einer Erntefahrt üblicherweise genutzte Betriebsmodus zum Ernten des Erntegutes 3. Dafür wird die Bedieneinheit 51 wie in Fig. 1 (a) beschrieben bedient.

Die Steuerungs- und Regelungseinheit 5 hält das Vorsatzgerät 1 im zweiten, Ausschalt-Betriebsmodus BA an, wenn der erste Bedienschalter 531 in die zweite Schaltstellung A1 verstellt wurde und der zweite Bedienschalter 532 in der Ausschaltstellung A2 angeordnet ist. Dafür wird die Bedieneinheit 51 wie in Fig. 1 (b) beschrieben bedient.

Um einen Gutstau von der Fahrerkabine 23 aus lösen zu können, weist der Mähdrescher 2 dieser Ausführungsform neben einem Reversier- Betriebsmodus RB zudem einen langsamen Betriebsmodus BG auf, in dem das Vorsatzgerät 1 in die Förderrichtung 30 betrieben wird, jedoch mit einer anderen, hier langsameren, Geschwindigkeit. Das Vorsatzgerät 1 dieses Mähdreschers 2 ist daher im Arbeitsbetrieb in zumindest zwei verschiedenen Geschwindigkeiten in Förderrichtung 30 betreibbar. In Abhängigkeit von dem Aggregat 1, das mit der Bedieneinheit 51 bedient wird, können auch andere zweite und dritte Betriebsmodi BR, BG vorgesehen sein.

Die Steuerungs- und Regelungseinheit 5 treibt das Vorsatzgerät 1 im dritten, langsamen Betriebsmodus BG mit einer zweiten, langsameren Geschwindigkeit als im NormalBetriebsmodus in Förderrichtung 30 an, solange der erste Bedienschalter 531 in die erste Schaltstellung E1 und gleichzeitig der zweite Bedienschalter 532 in die Einschaltstellung E2 verstellt sind. Dafür wird die Bedieneinheit 51 wie in Fig. 1 (c) beschrieben bedient.

Weiterhin treibt die Steuerungs- und Regelungseinheit 5 das Vorsatzgerät 1 im vierten, Reversier- Betriebsmodus BR gegen die Förderrichtung 30 an, solange der erste Bedienschalter 531 in die zweite Schaltstellung A1 und gleichzeitig der zweite Bedienschalter 532 in die Einschaltstellung E2 verstellt sind. Dafür wird die Bedieneinheit 51 wie in Fig. 1 (d) beschrieben bedient.

Neben diesen Betriebsmodi BN, BG, BR, BA können durch Zwischenstellungen des ersten und/oder zweiten Bedienschalters 531, 532 weitere Betriebsmodi des Vorschaltgerätes 1 vorgesehen sein, beispielsweise ein Abbrems- Betriebsmodus.

Der langsame Betriebsmodus BG des Vorsatzgerätes 1 ermöglicht ein Lösen eines Gutstaus im Vorsatzgerät 1 durch ein Loswackeln des Erntegutes 3. Das Vorsatzgerät 1 wird dafür im Arbeitsbetrieb des Mähdreschers 2 abwechselnd mit der zweiten, langsamen Geschwindigkeit in die Förderrichtung 30, und dann gegen die Förderrichtung 30 betrieben. Dadurch kann sich das Erntegut 3 lösen und es geht weniger Erntegut 3 verloren, als durch ein reines Reversieren des Vorsatzgerätes 1 oder durch ein manuelles Ausräumen des Vorsatzgerätes 1.

Damit das Vorsatzgerät 1, insbesondere Antriebsvorrichtungen 13 des Vorsatzgerätes 1, dabei nicht beschädigt werden, sieht das Verfahren vor, dass das Vorsatzgerät 1 vor dem langsamen Antreiben in die Förderrichtung 30 und jeweils zwischen dem langsamen Antreiben in Förderrichtung 30 und dem Antreiben gegen die Förderrichtung 30 für einen definierten Zeitraum von mehr als einer halben Sekunde automatisch angehalten wird.

Dabei wird der als Umschalter dienende zweite Bedienschalter 532 kontinuierlich mit dem Daumen der Bedienhand in der Einschaltstellung E2 gehalten, während der erste Bedienschalter 531 abwechselnd mit dem Zeigefinger und/oder dem Mittelfinger der Bedienhand von der ersten Schaltstellung E1 in die zweite Schaltstellung A1 und zurück verstellt wird. Um dabei das Ausschalten des Vorsatzgerätes 1 zu vermeiden, bleibt der erste Bedienschalter 531 beim Verstellen von der ersten in die zweite Schaltstellung E1, A1 und wieder zurück kontinuierlich gedrückt. Dadurch wird das Vorsatzgerät 1 lediglich in den definierten Zeiträumen angehalten.

Das Verfahren ist einhändig durchführbar, wobei der Bedienarm (nicht bezeichnet) des Bedieners 59 auf der Armablage 57 abgelegt werden kann. Es ist für den Bediener 59 daher intuitiv und sehr komfortabel von der Fahrerkabine 23 aus durchführbar.

### Bezugszeichenliste

- 1: Vorsatzgerät
- 11: Einzugsorgan, Einzugsschnecke
- 110: Einzugsachse
- 111: Einzugs(dreh-) richtung des Einzugsorgans
- 12: Messerleiste
- 13: Aktor
- 14: Haspel
- 2: Landwirtschaftliche Arbeitsmaschine, Mähdrescher, Feldhäcksler
- 21: Frontseite
- 22: Heckseite
- 23: Fahrerkabine
- 3: Erntegut
- 30: Förderrichtung
- 33: Gutstrom
- 4: Nachbearbeitungseinrichtung
- 41: Zuführboden
- 42: Rücklaufboden
- 43: Reinigungssieb
- 44: Gebläse
- 45: Überkehrelevator
- 46: Kornelevator
- 5: Steuerungs- und Regelungseinheit
- 50: Bedienerkonsole
- 51: Bedieneinheit
- 52: Mit einer Hand umgreifbares Bedienteil
- 520: Oberfläche
- 521: Seitenfläche
- 522: Erster Bereich
- 523: Zweiter Bereich
- 524: Winkel zwischen Oberfläche und Seitenfläche
- 525: Steg
- 53: Bedienschalter, Druck-, Dreh-, Druck- und/oder Kippschalter
- 531: Erster Bedienschalter, Vorsatzgerätschalter
- 532: Zweiter Bedienschalter, Betriebsmodus- Schalter
- 533: Dritter Bedienschalter, Dreschwerkschalter
- 54: Erstreckungsrichtung des ersten Bedienschalters
- 55: Handerstreckungsrichtung
- 56: Erstreckungswinkel zwischen erstem und zweitem Bereich
- 57: Armablage
- 58: Leuchtmittel
- 59: Bediener
- 6: Schrägförderer
- 7: Dreschwerk
- 71: Vordreschtrommel
- 72: Dreschtrommel
- 73: Umlenktrommel
- 74: Dreschkorb
- 8: Korntank
- FR: Fahrtrichtung
- S51: Steuersignal
- BN: Erster Betriebsmodus, Einziehen mit erster Geschwindigkeit, Normal-Betriebsmodus
- BA: Zweiter Betriebsmodus, Ausschalten
- BG: Dritter Betriebsmodus, Einziehen mit zweiter Geschwindigkeit, langsamer Betriebsmodus
- BR: Vierter Betriebsmodus, Reversier- Betriebsmodus

## Patentansprüche

1. Bedieneinheit (51) für eine landwirtschaftliche Arbeitsmaschine (2) mit einem ersten Bedienschalter (531) und einem zweiten Bedienschalter (532), die zum Umschalten zwischen verschiedenen Betriebsmodi (BN, BA, BR, BG) eines Aggregates (1) der Arbeitsmaschine (2) vorgesehen sind, wobei der erste Bedienschalter (531)
• von einer Grundstellung (G) ausgehend in eine erste Schaltstellung (E1) und zurück, oder
• von der Grundstellung (G) ausgehend in eine zweite Schaltstellung (A1) und zurück, verstellbar ist, und wobei der zweite Bedienschalter (532)
• von einer Ausschaltstellung (A2) in eine Einschaltstellung (E2) und zurück verstellbar ist,
**dadurch gekennzeichnet,**
**dass** den Schaltstellungen (E1, A1, E2, A2) der Bedienschalter (531, 532) eine Schaltfunktion zum Schalten des Aggregates (1) in einen Betriebsmodus (BN, BA, BR, BG) zugeordnet ist, wobei der zweite Bedienschalter (532) ein Umschalter zum Umschalten der Schaltfunktionen des ersten Bedienschalters (531) ist.

2. Bedieneinheit (51) nach Anspruch 1, **dadurch gekennzeichnet, dass** mit dem ersten Bedienschalter (531) und dem zweiten Bedienschalter (532) alle Betriebsmodi (BN, BA, BR, BG) des Aggregates (1) schaltbar sind.

3. Bedieneinheit (51) nach einem der vorherigen Ansprüche, **dadurch gekennzeichnet, dass** der erste Bedienschalter (531) elektronisch gesteuert ist.

4. Bedieneinheit (51) nach einem der vorherigen Ansprüche, **dadurch gekennzeichnet, dass** der erste Bedienschalter (531) und der zweite Bedienschalter (532) als Taster ausgebildet sind.

5. Bedieneinheit (51) nach einem der vorherigen Ansprüche, **dadurch gekennzeichnet, dass** der erste Bedienschalter (531) in der ersten Schaltstellung (E1) gegenüber der Grundstellung (G) versenkt und gegen eine Erstreckungsrichtung (54) verstellt angeordnet ist, und dass der erste Bedienschalter (531) in der zweiten Schaltstellung (A1) gegenüber der Grundstellung (G) versenkt, oder gegenüber der Grundstellung (G) versenkt und in die Erstreckungsrichtung (54) verstellt angeordnet ist.

6. Bedieneinheit (51) nach einem der vorherigen Ansprüche, **dadurch gekennzeichnet, dass** der zweite Bedienschalter (532) in der Einschaltstellung (A2) gegenüber der Ausschaltstellung (A2) verschoben, verdreht und/oder gekippt angeordnet ist.

7. Bedienerkonsole (50) mit einer Bedieneinheit (51) nach einem der vorherigen Ansprüche.

8. Bedienerkonsole (50) nach einem der Ansprüche 5 - 6, **dadurch gekennzeichnet, dass** die Bedienschalter (531, 532) zueinander versetzt angeordnet sind, so dass sie gleichzeitig einhändig bedienbar sind.

9. Landwirtschaftliche Arbeitsmaschine (2) mit einer Bedieneinheit (51) nach einem der Ansprüche 1 - 6.

10. Landwirtschaftliche Arbeitsmaschine (2) nach Anspruch 9, **dadurch gekennzeichnet, dass** das Aggregat (1) zum Fördern von Erntegut (3) in eine Förderrichtung (30) vorgesehen ist, wobei die landwirtschaftliche Arbeitsmaschine (2) eine Steuerungs- und Regelungseinheit (5) umfasst, die zum Erfassen der Schaltstellung (E1, A1, E2, A2) des ersten und/oder des zweiten Bedienschalters (531, 532) vorgesehen ist, und die zum Ein- und Ausschalten des Aggregates (1) vorgesehen ist, wobei die Steuerungs- und Regelungseinheit (5) in einem Arbeitsbetrieb der Arbeitsmaschine (2) dazu ausgebildet ist, das Aggregat (1) in Abhängigkeit von der erfassten Schaltstellung (E1, A1, E2, A2) in oder gegen die Förderrichtung (30) anzutreiben,
**dadurch gekennzeichnet, dass**
die Steuerungs- und Regelungseinheit (5) dazu ausgebildet ist, das Aggregat (1) im Arbeitsbetrieb
• In einem ersten Betriebsmodus (BN) mit einer ersten Geschwindigkeit in Förderrichtung (30) anzutreiben, wenn der erste Bedienschalter (531) in die erste Schaltstellung (E1) verstellt wurde und der zweite Bedienschalter (532) in der Ausschaltstellung (A2) angeordnet ist,
• In einem zweiten Betriebsmodus anzuhalten, wenn der erste Bedienschalter (531) in die zweite Schaltstellung (A1) verstellt wurde und der zweite Bedienschalter (532) in der Ausschaltstellung (A2) angeordnet ist, und/oder
• In einem dritten Betriebsmodus (BG) mit einer zweiten, insbesondere gegenüber der ersten Geschwindigkeit langsameren, Geschwindigkeit in Förderrichtung (30) anzutreiben, solange der erste Bedienschalter (531) in die erste Schaltstellung (E1) und gleichzeitig der zweite Bedienschalter (532) in die Einschaltstellung (E2) verstellt sind,
• In einem vierten Betriebsmodus (BR) gegen die Förderrichtung (30) anzutreiben, solange der erste Bedienschalter (531) in die zweite Schaltstellung (A1) und gleichzeitig der zweite Bedienschalter (532) in die Einschaltstellung (E2) verstellt sind.

11. Landwirtschaftliche Arbeitsmaschine (2) nach einem der Ansprüche 9 - 10, **dadurch gekennzeichnet, dass** das Aggregat ein Vorsatzgerät (1) zum Einziehen des Erntegutes (3) in die Arbeitsmaschine (2) ist.

12. Landwirtschaftliche Arbeitsmaschine (2), insbesondere nach einem der Ansprüche 9 - 11, mit einem als Vorsatzgerät ausgebildeten Aggregat (1), das in einem Arbeitsbetrieb der Arbeitsmaschine zum Abschneiden und Einziehen von Erntegut (3) in eine Förderrichtung (30) in die Arbeitsmaschine (2) vorgesehen ist, wobei die Arbeitsmaschine (2) eine Steuerungs- und Regelungseinheit (5) umfasst, die zum Ein- und Ausschalten des Vorsatzgerätes (1) vorgesehen ist,
**dadurch gekennzeichnet, dass**
die landwirtschaftliche Arbeitsmaschine ein Mähdrescher ist, und dass das Vorsatzgerät (1) im Arbeitsbetrieb in zumindest zwei verschiedenen Geschwindigkeiten in Förderrichtung (30) betreibbar ist.

13. Verfahren zum Lösen eines Gutstaus in einer landwirtschaftlichen Arbeitsmaschine (2) nach einem der Ansprüche 10 - 12, bei dem ein Aggregat (1), insbesondere ein Vorsatzgerät, im Arbeitsbetrieb der Arbeitsmaschine (2) abwechselnd
• mit einer zweiten, gegenüber einer Geschwindigkeit des Aggregates (1) in einem ersten Betriebsmodus, langsamen Geschwindigkeit in eine Förderrichtung (30), und
• gegen die Förderrichtung (30),
betrieben wird.

14. Verfahren nach Anspruch 13, **dadurch gekennzeichnet, dass** das Vorsatzgerät (1)
• vor dem langsamen Antreiben in Förderrichtung (30), sowie
• zwischen dem langsamen Antreiben in Förderrichtung (30) und dem Antreiben gegen die Förderrichtung (30)
jeweils für einen definierten Zeitraum von mehr als einer halben Sekunde, insbesondere von 0,7 - 1,5 Sekunden, automatisch angehalten wird.

15. Verfahren nach einem der Ansprüche 13 - 14, **dadurch gekennzeichnet, dass** der zweite Bedienschalter (532) dabei kontinuierlich in die Einschaltstellung (E2) verstellt ist, wobei der erste Bedienschalter (531) abwechselnd von der ersten Schaltstellung (E1) in die zweite Schaltstellung (A1) und zurück verstellt wird.
